# EUROPÄISCHE PATENTSCHRIFT

(11) **EP 3 305 476 B1**
(45) Veröffentlichungstag und Bekanntmachung des Hinweises auf die Patenterteilung: **28.04.2021**
(21) Anmeldenummer: 17189867.9
(22) Anmeldetag: 07.09.2017
(51) Int. Cl.: B25J 9/02

(54) **MANIPULATIONSVORRICHTUNG**
MANIPULATION DEVICE
DISPOSITIF DE MANIPULATION

(30) Priorität: 29.09.2016 DE 202016105428 U
(43) Veröffentlichungstag der Anmeldung: 11.04.2018
(73) Patentinhaber: Pfuderer, Markus, 70199 Stuttgart (DE)
(72) Erfinder: Pfuderer, Markus, 70199 Stuttgart (DE)
(74) Vertreter: Mammel und Maser

(56) Entgegenhaltungen:
- CN-U- 204 075 734
- DE-A1-102014 117 150

## Beschreibung

Die Erfindung betrifft eine Manipulationsvorrichtung zum Handhaben und/oder Bearbeiten von Werkstücken, insbesondere für eine Montagemaschine.

Aus der DE 10 2011 114 869 A1 ist eine Manipulationsvorrichtung zur Handhabung und/oder Bearbeitung eines Werkstücks bekannt, die eine erste Antriebseinheit zur Erzeugung einer linearen Bewegung eines ersten Läufers, eine zweite Antriebseinheit zur Erzeugung einer linearen Bewegung eines zweiten Läufers und ein zur Aufnahme eines Werkstücks und/oder eines Werkzeugs geeignetes Befestigungselement umfasst. Die Antriebseinheiten sind derart relativ zueinander angeordnet, dass eine Bewegungsrichtung des ersten Läufers und eine Bewegungsrichtung des zweiten Läufers parallel zueinander ausgerichtet sind. Der erste Läufer ist fest mit einer Hubeinheit verbunden, die einen durch den zweiten Läufer betätigbaren Hubmechanismus umfasst, der derart ausgestaltet ist, dass eine Bewegung des zweiten Läufers relativ zu dem ersten Läufer in eine Bewegung des Befestigungselementes senkrecht zur Bewegungsrichtung der Läufer umgewandelt wird.

Diese Manipulationsvorrichtung weist den Nachteil auf, dass ein hoher konstruktiver Aufwand gegeben ist. Darüber hinaus ist der Arbeitsraum, insbesondere bezüglich einer Hubbewegung der Hubeinheit, begrenzt.

Die CN 204 075 734 U betrifft einen verfahrbaren Arbeitstisch mit einem Mehrachsen-Verstellmechanismus, der eine Stellbewegung in der X-, Y- und Z-Ebene ermöglicht. Dieser Mehrachsen-Verstellmechanismus umfasst einen ersten Motor, der zur Ansteuerung der Stellbewegung eines Schlittens in der X- und Y-Ebene vorgesehen ist, sowie einen zweiten Motor, der am Schlitten vorgesehen ist und die Stellbewegung eines Bearbeitungskopfes in der Z-Ebene ansteuert. Beide Motoren sind als Linearmotoren ausgebildet, wobei der erste Motor aus der Kombination aus den beiden Schlitten als Läufer und deren Führungsschiene als Stator ausgebildet ist.

Aus der DE 10 2014 117 150 A1 ist ein lineares Transportsystem für einen Fertigungsprozess bekannt, bei welchem mehrere passiv kabellose Transportschlitten entlang einer Führungsschiene verfahrbar sind. Durch die Schlitten werden Werkstücke entlang eines längeren Transportweges von Bearbeitungsstation zu Bearbeitungsstation transportiert. Zur autonomen Verfahrbarkeit der Schlitten umfasst dieses Transportsystem einen Linearmotor, bei dem die Schlitten jeweils einen Läufer des Motors bilden und die Führungsschiene den Stator.

Der Erfindung liegt die Aufgabe zugrunde, eine Manipulationsvorrichtung zu schaffen, welche einen einfachen konstruktiven Aufbau und eine hohe Dynamik mit einer hohen Genauigkeit ermöglicht.

Diese Aufgabe wird durch eine Manipulationsvorrichtung gelöst, welche einen Grundkörper aufweist, an dem eine erste Führung vorgesehen ist, welche zwei parallel zueinander ausgerichtete Führungsschienen aufweist und entlang denen ein erster und zweiter Schlitten verfahrbar aufgenommen ist. An dem Grundkörper ist ein erster Motor vorgesehen, der den ersten Schlitten antreibt und ein zweiter Motor, der den zweiten Schlitten antreibt, wobei der erste und zweite Motor jeweils getrennt ansteuerbar sind. An dem ersten und zweiten Schlitten ist ein dritter Schlitten durch eine zweite Führung geführt, wobei die zweite Führung zwei Führungsschienen aufweist, die jeweils mit einem Führungswagen am ersten und zweiten Schlitten gehalten sind. Die zwei Führungsschienen des dritten Schlittens sind V-förmig zueinander ausgerichtet. Diese Ausgestaltung der Manipulationsvorrichtung weist den Vorteil auf, dass durch die Ansteuerung des ersten und zweiten Schlitten durch jeweils einen Motor eine erhöhte Kraft bei einer Verfahrbewegung auf den dritten Schlitten übertragen werden kann, an dem beispielsweise eine Handhabungsvorrichtung für eine Handhabung oder ein Bearbeitungswerkezug für eine Bearbeitung eines Werkstücks in einer Montagemaschine anordenbar ist. Darüber hinaus ist durch diesen Aufbau eine einfache und flachbauende Manipulationsvorrichtung gegeben. Dadurch kann auf einem Grundgestell einer Montagemaschine eine Vielzahl von Manipulationsvorrichtungen nebeneinanderliegend angeordnet sein. Darüber hinaus weist diese Anordnung den Vorteil auf, dass lediglich der erste und zweite Schlitten und gegebenenfalls noch der dritte Schlitten für eine Stellbewegung verfahren wird, wodurch geringe Massen bewegt werden. Dies erhöht die Dynamik der Manipulationsvorrichtung.

Eine bevorzugte Ausgestaltung der Manipulationsvorrichtung sieht vor, dass die erste Führung in eine Gebrauchslage der Manipulationsvorrichtung vertikal ausgerichtet ist und die zweite Führung in einer vertikalen Ebene der ersten Führung verfahrbar ist. Dadurch kann eine kompaktbauende, insbesondere schmalbauende Manipulationsvorrichtung erzielt werden.

Die Motoren sind zwischen den beiden Führungsschienen der ersten Führung an dem Grundkörper angeordnet. Dies weist den Vorteil auf, dass die Motoren selbst für eine Verfahrbewegung ruhend an dem Grundgestell verbleiben können, wodurch wiederum die bewegten Massen verringert werden. Vorzugsweise sind die Motoren für den ersten und zweiten Schlitten nebeneinander zwischen den beiden Führungsschienen der Führung angeordnet. Dies begünstigt wieder eine schmalbauende Anordnung.

Die Motoren sind fest an dem Grundkörper angeordnet. Der Grundkörper kann als Tragkonstruktion ausgebildet sein, an welchem auch die Führungsschienen der ersten Führung montierbar sind.

Vorteilhafterweise ist die Antriebsrichtung der Motoren parallel zur Führung ausgerichtet. Dadurch kann wiederum ein einfaches Antriebskonzept gewählt werden.

Die Motoren zwischen der ersten und zweiten Führungsschiene der ersten Führung sind bevorzugt derart angeordnet, dass diese von dem ersten und zweiten Schlitten überfahrbar sind. Dafür ist vorteilhafterweise zwischen den beiden Führungen ein Bauraum, insbesondere eine Vertiefung, am Grundgestell vorgesehen, so dass der erste und zweite Schlitten an den Motoren vorbeigeführt werden können. Dies ermöglicht auch, dass über die gesamte Länge der Führungsschiene der ersten Führung ein Verstellbereich beziehungsweise Verfahrbereich für den ersten und zweiten Schlitten ermöglicht ist.

Eine vorteilhafte Ausgestaltung der Manipulationsvorrichtung sieht vor, dass die V-förmige Anordnung der Führungsschienen der zweiten Führung symmetrisch zu einer Senkrechten der Führungsschienen der ersten Führung ausgerichtet ist. Dadurch wird ermöglicht, dass zusätzlich zur Verfahrbewegung in vertikaler Richtung der dritte Schlitten in horizontaler Richtung gegenüber dem ersten und zweiten Schlitten verfahrbar ist. Dadurch ist eine Verfahrbewegung des dritten Schlittens in einer vertikal ausgerichteten Ebene gegeben.

Die Führungsschienen der zweiten Führung sind in einem Winkel von 30 oder 60 Grad zueinander ausgerichtet. Dies weist den Vorteil auf, dass für die Bewegung in der Horizontalen eine Übersetzung in einem Kraftverhältnis von 1,4 ermöglicht ist.

Des Weiteren ist vorgesehen, dass an dem dritten Schlitten ein Trägerelement angeordnet ist, welches an dessen freien Ende eine Anschlussschnittstelle aufweist. Daran können verschiedentliche Handhabungseinrichtungen, Werkzeuge oder dergleichen in einfacher Weise befestigt und auch schnell ausgetauscht werden.

Zur Erzielung einer hohen Dynamik ist bevorzugt vorgesehen, dass die Motoren als elektrische Linearmotoren ausgebildet sind.

Zur Erzielung einer hohen Genauigkeit bei der Verfahrbewegung des Trägerelementes an der Manipulationsvorrichtung sind bevorzugt Präzisionsführungen vorgesehen. Dabei können insbesondere Kugelumlaufführungen eingesetzt werden.

An einer Unterseite des Grundkörpers ist eine Montageplatte vorgesehen, durch welche die Manipulationsvorrichtung an dem Grundgestell der Montagemaschine befestigbar ist. Dadurch kann wiederum eine definierte Anschlussstelle geschaffen werden.

Die Erfindung sowie weitere vorteilhafte Ausführungsformen und Weiterbildungen derselben werden im Folgenden anhand der in den Zeichnungen dargestellten Beispiele näher beschrieben und erläutert. Die der Beschreibung und den Zeichnungen zu entnehmenden Merkmale können einzeln für sich oder zu mehreren in beliebiger Kombination erfindungsgemäß angewandt werden. Es zeigen:
- Figur 1: eine perspektivische Ansicht eines Moduls einer Montagemaschine mit einer Manipulationsvorrichtung,
- Figur 2: eine schematische und perspektivische Ansicht der Manipulationsvorrichtung gemäß Figur 1,
- Figur 3: eine perspektivische Ansicht eines Grundkörpers der Manipulationsvorrichtung gemäß Figur 2,
- Figur 4: eine schematische Ansicht auf einen Schlitten der Manipulationsvorrichtung gemäß Figur 2,
- Figur 5: eine schematische Ansicht auf die Manipulationsvorrichtung gemäß Figur 2 mit einem ausgeblendeten dritten Schlitten,
- Figur 6: eine schematische Ansicht auf eine Innenseite des dritten Schlitten der Manipulationsvorrichtung gemäß Figur 2,
- Figur 7: eine schematische Ansicht einer weiteren Arbeitsposition der Manipulationsvorrichtung zu Figur 2,
- Figur 8 und 9: weitere schematische Ansichten von Arbeitspositionen der Manipulationsvorrichtung gemäß Figur 2.

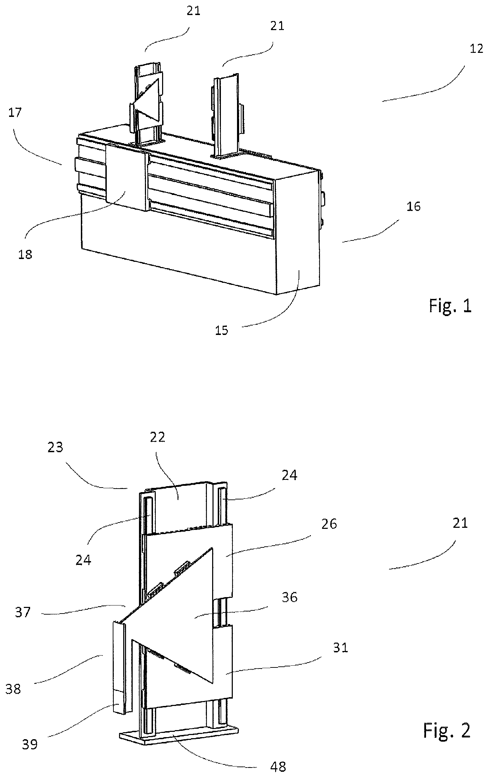

In Figur 1 ist eine perspektivische Ansicht eines Montagemoduls 12 oder eines Bearbeitungsmodules einer im Detail nicht näher dargestellten Montagemaschine oder eines Montage-Transfersystems. Dieses Montagemodul 12 umfasst ein Grundgestell 15, an welchem ein Transfermodul 16 angeordnet ist. Dieses Transfermodul 16 umfasst beispielsweise seitlich an dem Grundgestell 15 angeordnete Führungen 17, entlang denen Werkstückträger 18 verfahrbar geführt sind. An einer Oberseite des Grundgestells 15 können ein oder mehrere Manipulationsvorrichtungen 21 angeordnet sein. Die Werkstückträger 16 werden einzeln oder in Gruppen taktweise zu der oder den Manipulationsvorrichtungen 21 am Grundgestell 15 verfahren und positioniert. Nach einer erfolgten Handhabung, Montage und/oder Bearbeitung des Werkstücks durch die Manipulationsvorrichtung 21 wird das Werkstück mit dem Werkstückträger 16 zu einer nachfolgenden Bearbeitungsstation weitertransportiert.

In Figur 2 ist schematisch vergrößert die Manipulationsvorrichtung 21 dargestellt. Diese Manipulationsvorrichtung 21 umfasst ein Grundkörper 22, an welchem eine erste Führung 23 mit zwei parallel zueinander beabstandeten Führungsschienen 24 vorgesehen ist. Die Führungsschienen 24 sind vorteilhafterweise vertikal ausgerichtet und an dem Grundgestell 22 vorzugsweise lösbar befestigt. Entlang diesen Führungsschienen 24 ist ein erster Schlitten 26 und ein zweiter Schlitten 31 verfahrbar aufgenommen. Diese können gemeinsam und unabhängig voneinander entlang der Länge der Führungsschienen 24 verfahrbar angesteuert werden. Jeweils an einer den Führungsschienen 24 zugeordneten Seite des ersten und zweiten Schlittens 26, 31 ist zumindest ein Führungselement 24 vorgesehen, welches den ersten und zweiten Schlitten 26, 31 verfahrbar zu den Führungsschienen 24 aufnimmt.

An dem ersten Schlitten 26 und zweiten Schlitten 31 ist ein dritter Schlitten 36 vorgesehen, welcher über eine zweite Führung 37 relativ zum ersten und zweiten Schlitten 26, 31 verfahrbar aufgenommen ist. An dem dritten Schlitten 36 ist ein Trägerelement 38 vorgesehen, welches außerhalb des Grundgestells 22 positioniert ist. Dieses Trägerelement 38 kann bevorzugt eine Schnittstelle 39 aufweisen, an der über eine komplementäre Schnittstelle unmittelbar Bearbeitungswerkzeuge, Handhabungsvorrichtung oder sonstige Werkzeuge oder dergleichen lösbar befestigt sind. Beispielsweise können Bohrer, Schrauber als auch Greif- oder Presswerkzeuge oder dergleichen daran befestigbar sein.

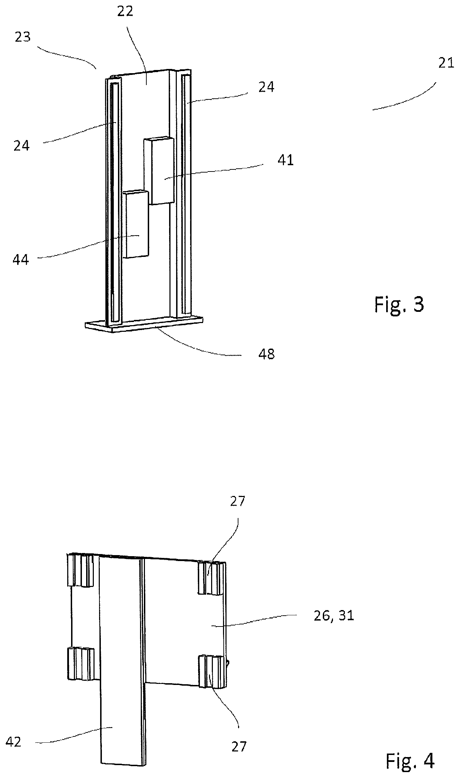

In Figur 3 ist eine schematische Ansicht auf den Grundkörper 22 der Manipulationsvorrichtung 21 dargestellt, wobei der erste, zweite und dritte Schlitten 26, 31, 36 ausgeblendet sind. Zwischen den beiden Führungsschienen 24 der ersten Führung 23 sind ein erster und zweiter Motor 41, 44 angeordnet. Diese Motoren 41, 44 sind vorzugsweise fest an dem Grundkörper 22 montiert. Diese liegen nebeneinander und zwischen den Führungsschienen 24, wobei die Höhe der Motoren 41, 44 beziehungsweise die Einbautiefe derart bemessen ist, dass der erste und zweite Schlitten 26, 31 an den Motoren 41, 44 vorbeigeführt werden kann. Bevorzugt sind elektrische Linearmotoren vorgesehen, welche unabhängig mittels einer Steuerung ansteuerbar sind.

Durch den ersten und zweiten Motor 41, 44 wird jeweils ein Antriebselement 42 betätigt, welches an einer zum Grundkörper 22 weisenden Seite des Schlittens 26, 31 angeordnet ist, wie in Figur 4 dargestellt ist. An dieser Seite, auch innenliegenden Seite genannt, sind auch die Führungselemente 27 des ersten und zweiten Schlittens 26, 31 vorgesehen. Der erste und zweite Schlitten 26, 31 sind plattenförmig oder als eine plattenförmige Tragstruktur ausgebildet, um ein geringes Bauteilgewicht aufzuweisen.

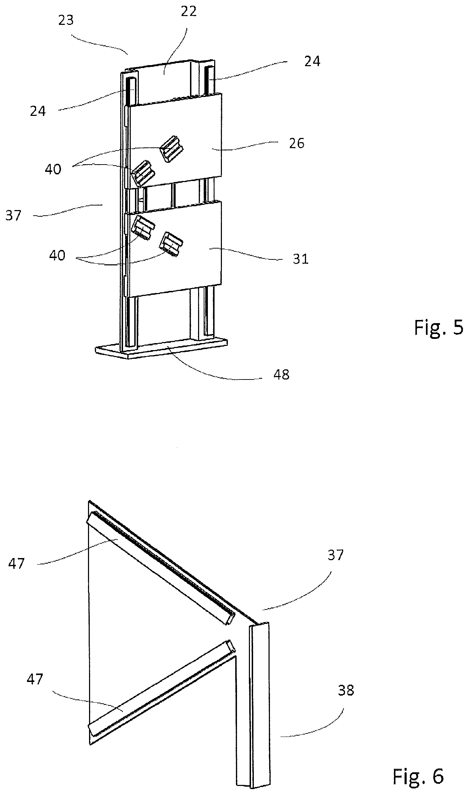

An einer Außenseite des ersten und zweiten Schlittens 26, 31 beziehungsweise den Führungselementen 27 gegenüberliegend sind an dem ersten und zweiten Schlitten 26, 31 Führungselemente 40 der zweiten Führung 37 angeordnet, wie dies in Figur 5 dargestellt ist. Die an einer Außenseite des ersten und zweiten Schlittens 26, 31 angeordneten Führungselemente 40 sind an eine V-förmige Anordnung der Führungsschiene 47 der zweiten Führung 37 angepasst. Vorteilhafterweise weist diese V-förmige Anordnung der Führung 37 einen Winkel von 30° oder 60° auf, wobei die Ausrichtung vorzugsweise symmetrisch zu einer Horizontalen ist.

Die Figur 6 zeigt eine Ansicht auf den dritten Schlitten 36 mit den daran angeordneten Führungsschienen 47, welche in den Führungselementen 40 an dem ersten und zweiten Schlitten 26, 31 geführt sind. Der dritte Schlitten 36 kann ebenfalls als Tragstruktur in Leichtbauweise ausgebildet sein, so dass lediglich Haltepunkte für die Führungsschienen 47 als auch das Trägerelement 38 als Tragstruktur vorgesehen sind.

Die erste und zweite Führung 23, 37 können vorzugsweise als Präzisionsführung, insbesondere als Kugelumlaufführung ausgebildet sein.

Die erste Führung 23 dient dazu, um den ersten und zweiten Schlitten 26, 31 in einer vertikalen Ebene auf- und abwärts zu bewegen. Dadurch kann die Arbeitshöhe des Trägerelementes 38 eingestellt und angefahren werden.

Durch eine Relativbewegung des ersten Schlittens 26 und des zweiten Schlittens 31 aufeinander zu oder voneinander weg wird eine horizontale Verfahrbewegung des Trägerelementes 38 aufgrund der V-förmigen Anordnung der Führungsschiene 47 der zweiten Führung 37 angesteuert.

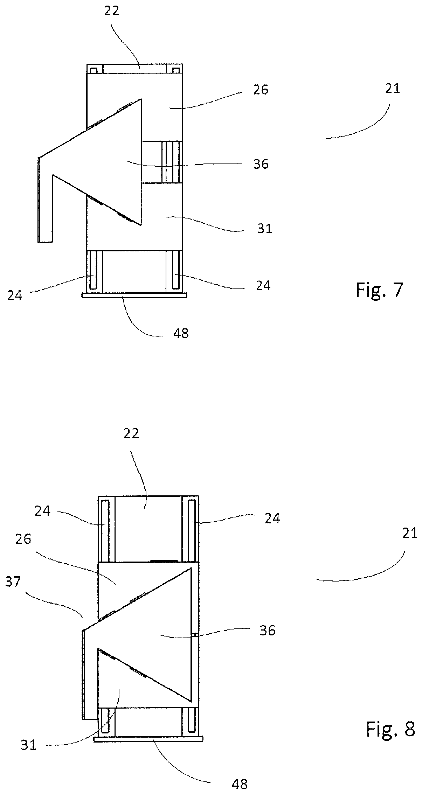

In Figur 7 ist eine schematische Seitenansicht dargestellt, bei welcher abweichend zur Arbeitsposition des Trägerelementes 38 in Figur 2 das Trägerelement 38 gegenüber dem Grundkörper 22 vollständig ausgefahren, also entfernt zum Grundkörper 22 positioniert wird und in einer oberen Position am Grundkörper 22 angeordnet ist. Hierzu ist der erste Schlitten 26 in eine obere Endposition zur Führungsschiene 24 positioniert. Der zweite Schlitten 31 ist gegenüber dem ersten Schlitten 26 beabstandet, so dass das Trägerelement 38 horizontal ausgefahren wird. Sofern der zweite Schlitten 31 auf den ersten Schlitten 36 zubewegt wird, bleibt die obere Position des Trägerelementes 38 erhalten, wohingegen das Trägerelement 38 nahe benachbart zum Grundkörper 22 positioniert ist. Sofern die Arbeitsposition des Trägerelementes 38 gemäß Figur 7 in der Höhe verändert werden soll, kann der erste und zweite Schlitten 26, 31 synchron abwärtsbewegt werden.

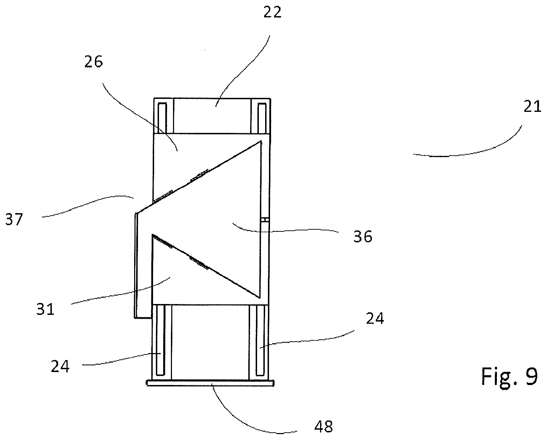

In Figur 8 ist eine weitere Arbeitsposition der Manipulationsvorrichtung 21 dargestellt. Beispielsweise sind der erste und zweite Schlitten 26, 31 nahe zueinander oder aneinander angrenzend angeordnet, so dass das Trägerelement 38 eingefahren und nahe zum Grundkörper 22 angeordnet ist. Gleichzeitig ist der erste und zweite Schlitten 26, 31 in einer unteren Position angeordnet. Sofern das Trägerelement 38 in dieser in Figur 8 dargestellten Position nach oben gefahren werden soll, um die Position gemäß Figur 9 einzunehmen, können die beiden Schlitten 26, 31 gleichzeitig entlang der Führungsschiene 24 nach oben bewegt werden.

Die Einnahme der verschiedentlichen Positionen ist durch die unabhängige Ansteuerung des ersten und zweiten Schlittens 26, 31 mit jeweils einem ersten und zweiten Motor 41, 44 ermöglicht.

Sofern beispielsweise für eine Bearbeitung an einem Werkstück eine Hubbewegung entlang der Führungsschienen 24 erforderlich ist, weist diese Anordnung den Vorteil auf, dass die Antriebskraft von jedem Motor 41, 44 auf den damit verbundenen ersten und zweiten Schlitten 26, 31 übertragen wird, so dass die doppelte Antriebskraft als Arbeitskraft am Trägerelement 39 eingesetzt werden kann. Die V-förmige Anordnung der zweiten Führung 37 weist den Vorteil auf, dass des Weiteren eine Kraftübersetzung gegenüber einem X-Y-Tisch oder einem X-Y-Schlitten gegeben ist, die größer als 1 ist. Durch die V-förmige Anordnung ist die Übertragung einer 1,4-fachen Kraft ermöglicht. Zudem weist diese Anordnung den Vorteil auf, dass eine schmalbauende Anordnung gegeben ist.

Bevorzugt kann vorgesehen sein, dass die Manipulationsvorrichtung 21 durch ein Gehäuse oder Schutzabdeckungen geschlossen ist, so dass lediglich an einer schmalen Stirnseite der Manipulationsvorrichtung ein Schlitz vorgesehen ist, durch welchen ein Abschnitt des dritten Schlittens 36 herausgeführt ist, an dem das Trägerelement 38 angeordnet ist. Dadurch kann eine sichere Anordnung geschaffen werden, wodurch eine Verletzungsgefahr verringert ist.

## Patentansprüche

1. Manipulationsvorrichtung zum Handhaben und/oder Bearbeiten von Werkstücken, insbesondere für eine Montagemaschine,
- mit einem Grundkörper (22),
- mit einer ersten Führung (23), welche zwei am Grundkörper (22) vorgesehene Führungsschienen (24) aufweist, die parallel zueinander ausgerichtet sind und entlang denen ein erster und zweiter Schlitten (26, 31) verfahrbar ist,
- mit einem ersten Motor (41), der den ersten Schlitten (26) antreibt und mit einem zweiten Motor (44), der den zweiten Schlitten (31) antreibt, wobei der erste und zweite Motor (41, 44) jeweils getrennt ansteuerbar sind,
- mit einem dritten Schlitten (36), der durch eine zweite Führung (37) an dem ersten und zweiten Schlitten (26, 31) geführt ist, wobei die zweite Führung (37) zwei Führungsschienen (47) aufweist, die jeweils mit zumindest einem Führungselement (40) an dem ersten und zweiten Schlitten (26, 31) gehalten sind und die zwei Führungsschienen (47) der zweiten Führung (37) V-förmig zueinander ausgerichtet sind, wobei die erste Führung (23) in einer Gebrauchslage der Manipulationsvorrichtung vertikal ausgerichtet ist und die zweite Führung (37) in einer vertikalen Ebene der ersten Führung (23) bewegbar ist, wobei an dem dritten Schlitten (36) ein Trägerelement (38) angeordnet ist, welches an dessen freien Ende eine Schnittstelle zur Aufnahme eines Bearbeitungswerkzeuges oder einer Handhabungseinrichtung aufweist,
**dadurch gekennzeichnet,**
- **dass** die Motoren (41, 44) zwischen den beiden Führungsschienen (24) der ersten Führung (23) fest an dem Grundkörper (22) angeordnet sind,
- **dass** an einer Unterseite des Grundkörpers (22) eine Montageplatte (48) vorgesehen ist, welche an einem Grundgestell (15) der Montagemaschine befestigbar ist.

2. Manipulationsvorrichtung nach Anspruch 1, **dadurch gekennzeichnet, dass** die Motoren (41, 44) nebeneinanderliegend positioniert sind.

3. Manipulationsvorrichtung nach Anspruch 1 oder 2, **dadurch gekennzeichnet, dass** eine Antriebsrichtung der Motoren (41, 44) parallel zu den Führungsschienen (24) der ersten Führung (23) ist.

4. Manipulationsvorrichtung nach einem der vorhergehenden An-sprüche, **dadurch gekennzeichnet, dass** die Motoren (41, 44) zwischen den Führungsschienen (47) derart am Grundkörper (22) angeordnet sind, dass diese von dem ersten und zweiten Schlitten (26, 31) überfahrbar sind.

5. Manipulationsvorrichtung nach einem der vorhergehenden Ansprüche, **dadurch gekennzeichnet, dass** die V-förmige Anordnung der Führungselemente (40) und Führungsschienen (47) der zweiten Führung (37) symmetrisch zu einer Senkrechten der Führungsschiene (24) der ersten Führung (23) ausgerichtet sind.

6. Manipulationsvorrichtung nach einem der vorhergehenden Ansprüche, **dadurch gekennzeichnet, dass** die Führungselemente (40) und daran geführten Führungsschienen (47) der zweiten Führung (37) in einem Winkel von 30° oder 60° zueinander ausgerichtet sind.

7. Manipulationsvorrichtung nach einem der vorhergehenden Ansprüche, **dadurch gekennzeichnet, dass** die Motoren (41, 44) als elektrische Linearmotoren ausgebildet sind.

8. Manipulationsvorrichtung nach einem der vorhergehenden Ansprüche, **dadurch gekennzeichnet, dass** die Führung (23, 37)als Präzisionsführung, insbesondere Kugelumlaufführung ausgebildet ist.

## Claims

1. A manipulation device permitting to manipulate and/or process workpieces, in particular for an assembly machine, including:
- a main body (22),
- a first guide (23) having two guide rails (24) provided on said main body (22) which are aligned in parallel with each other and along which a first and a second carriage (26, 31) may be displaced,
- a first motor (41) which drives the first carriage (26) and a second motor (44) which drives the second carriage (31), each of said first and second motors (41, 44) being separately activatable,
- a third carriage (36) which is guided by a second guide (37) on the first and second carriages (26, 31), said second guide (37) having two guide rails (47) held on said first and second carriages (26, 31) by means of at least one guide element (40), respectively, and the two guide rails (47) of said second guide (37) being oriented in a V-shaped manner with respect to each other, with the first guide (23) being vertically oriented when the manipulation device is in a position of use and the second guide (37) being movable in a vertical plane of the first guide (23), said third carriage (36) having a support element (38) arranged thereon which, on its free end, has an interface for accommodating a processing tool or a handling apparatus,
**characterised in that**
- the motors (41, 44) are fixedly arranged on the main body (22) between the two guide rails (24) of the first guide (23),
- at a bottom of the main body (22), a mounting plate (48) is provided which may be fastened to a base frame (15) of the assembly machine.

2. The manipulation device as claimed in claim 1, **characterised in that** the motors (41, 44) are positioned adjacent to each other.

3. The manipulation device as claimed in claim 1 or 2, **characterised in that** a drive direction of the motors (41, 44) is parallel to the guide rails (24) of the first guide (23).

4. The manipulation device as claimed in any of the preceding claims, **characterised in that** the motors (41, 44) located between the guide rails (47) are arranged on the main body (22) in such a manner that they may be crossed over by the first and second carriages (26, 31).

5. The manipulation device as claimed in any of the preceding claims, **characterised in that** the guide elements (40) and guide rails (47) of the second guide (37), which are arranged in a V-shaped disposition, are oriented symmetrically with respect to a perpendicular of the guide rail (24) of the first guide (23).

6. The manipulation device as claimed in any of the preceding claims, **characterised in that** the guide elements (40), and the guide rails (47) which are guided by them and together form the second guide (37), are oriented at an angle of 30° or 60° with respect to each other.

7. The manipulation device as claimed in any of the preceding claims, **characterised in that** the motors (41, 44) are realised as electric linear motors.

8. The manipulation device as claimed in any of the preceding claims, **characterised in that** the guide (23, 37) is realised as a precision guide, in particular a recirculating ball bearing guide.

## Revendications

1. Dispositif de manipulation destiné à manipuler et/ou à usiner des pièces, en particulier pour une machine de montage, pourvu
- d'un corps de base (22),
- d'un premier guide (23) qui présente deux rails de guidage (24) prévus sur le corps de base (22) lesquels sont orientés parallèlement l'un à l'autre et le long desquels peuvent être déplacés un premier et un deuxième chariot (26, 31),
- d'un premier moteur (41) qui entraîne le premier chariot (26) et d'un deuxième moteur (44) qui entraîne le deuxième chariot (31), le premier et le deuxième moteur (41, 44) pouvant être respectivement activés de manière séparée,
- d'un troisième chariot (36) qui est guidé sur le premier et le deuxième chariot (26, 31) grâce à un deuxième guide (37), le deuxième guide (37) présentant deux rails de guidage (47) qui sont maintenus sur le premier et le deuxième chariot (26, 31) respectivement par au moins un élément de guidage (40) et les deux rails de guidage (47) du deuxième guide (37) étant orientés en V l'un par rapport à l'autre, le premier guide (23) étant orienté de manière verticale lorsque le dispositif de manipulation se trouve dans une position d'utilisation et le deuxième guide (37) pouvant être déplacé dans un plan vertical du premier guide (23), sur le troisième chariot (36) étant disposé un élément porteur (38) qui présente, à son extrémité libre, une interface destinée à recevoir un outil d'usinage ou un organe de manipulation,
**caractérisé en ce que**
- les moteurs (41, 44) sont disposés de manière fixe sur le corps de base (22), entre les deux rails de guidage (24) du premier guide (23),
- sur une face inférieure du corps de base (22) est prévue une plaque de montage (48) qui peut être fixée sur un cadre de base (15) de la machine de montage.

2. Dispositif de manipulation selon la revendication 1, **caractérisé en ce que** les moteurs (41, 44) sont positionnés de manière à se trouver côte à côte.

3. Dispositif de manipulation selon la revendication 1 ou 2, **caractérisé en ce qu'**un sens d'entraînement des moteurs (41, 44) est parallèle aux rails de guidage (24) du premier guide (23).

4. Dispositif de manipulation selon l'une quelconque des revendications précédentes, **caractérisé en ce que** les moteurs (41, 44) situés entre les rails de guidage (47) sont disposés sur le corps de base (22) de manière telle que le premier et le deuxième chariot (26, 31) peuvent passer par-dessus.

5. Dispositif de manipulation selon l'une quelconque des revendications précédentes, **caractérisé en ce que** la disposition en V des éléments de guidage (40) et des rails de guidage (47) du deuxième guide (37) est orientée de manière symétrique par rapport à une perpendiculaire du rail de guidage (24) du premier guide (23).

6. Dispositif de manipulation selon l'une quelconque des revendications précédentes, **caractérisé en ce que** les éléments de guidage (40) et les rails de guidage (47) du deuxième guide (37) qui sont guidés sur ceux-ci sont orientés entre eux selon un angle de 30° ou de 60°.

7. Dispositif de manipulation selon l'une quelconque des revendications précédentes, **caractérisé en ce que** les moteurs (41, 44) sont réalisés en tant que moteurs linéaires électriques.

8. Dispositif de manipulation selon l'une quelconque des revendications précédentes, **caractérisé en ce que** le guide (23, 37) est formé en tant que guide de précision, en particulier en tant que guide à recirculation de billes.
